# EUROPEAN PATENT APPLICATION

(11) **EP 0 772 378 A2**
(43) Date of publication of application: **07.05.1997**
(21) Application number: 96117698.9
(22) Date of filing: 05.11.1996
(51) Int. Cl.: H05B 39/04

(54) **Color/Brightness-adjustable light for automobiles and a color/brightness-adjustable method thereof**

(30) Priority: 06.11.1995 KR 9539950
(71) Applicant: HYUNDAI MOTOR COMPANY, Jongro-ku, Seoul 110-270 (KR)
(72) Inventor: Park, Sun Soon, Dong-ku, Ulsan-shi, Kyungsangnam-do (KR)
(74) Representative: Viering, Jentschura & Partner

(57) **Abstract**

Disclosed is a color/brightness-adjustable light for automobiles and a color/brightness adjustable method thereof comprising at least one light portion (10), which mixes three colors (red, green, and blue) in different combinations so as to enable the emission of light to a variety of different colors; a switch portion (2), which is able to select and either turn on or off one or a plurality of light portion (10), according to the needs of a driver; a setting portion (4), which sets a brightness and color desired by the driver to the above light portion (10); a control portion (6), which compares information of the selected light portion (10) with information inputted in the setting portion (4) then determines a control value; and a pulse generating portion (8), which generates pulses corresponding to the control value determined in the control portion (6) and distributes and transmits this to the light portion (10).

## Description

### BACKGROUND

The present invention relates to a color/brightness-adjustable light for automobiles, and more particularly, to a color/brightness-adjustable light for automobiles and a color/brightness-adjustable method thereof in which colors and degrees of brightness can be adjusted for various lights of a vehicle-headlights, turn signal lights, tail lights, etc.-according to surrounding outside conditions.

Automobiles use an assortment of different lights for different purposes. Namely, automobile lights either illuminate objects for a driver to see, or they alert those in other vehicles as to driving maneuvers the driver is or will be performing. Headlights and fog lights perform the function of illumination, while turn signal lights, tail lights, brake lights, etc. perform signalling functions. Lights that perform the function of signalling are normally combination lights (i.e. they are structured combining two or three different light bulbs).

Prior art lights for automobiles use bulbs (combinations of bulbs for some lights) with different wattages and coloring of lenses depending on their functions and purposes. So, for example, headlights utilize bulbs that have a degree of brightness (generally a 35-60W bulb) that are able to illuminate an object at night at a distance of 100m, while tail lights use 5-8W bulbs and red-tinted lenses. Turn signal lights and parking lights are combination lights, and tail lights and brake lights are realized through a single combination light used for both purposes. Lights mounted to a rear of the automobile are generally combination lights.

In the prior art lights for automobiles, as only a single color and brightness can be emitted from the light bulbs, color variety as desired by the driver and the illumination of a color appropriate to diverse driving and weather conditions is not possible. As a result, visibility to a front and rear of an automobile is often poor, and lights used for signalling are frequently not transmitted clearly to drivers in other vehicles.

### SUMMARY

The present invention has been made in an effort to solve the above problems.

It is an object of the present invention to provide a color/brightness-adjustable light for automobiles and a color/brightness adjustable method thereof in which brightness and color can be adjusted in a light portion according to surrounding outside conditions to improve illumination and to more clearly relay signals to other drivers.

To achieve the above object, the present invention provides a color/brightness-adjustable light for automobiles and a color/brightness-adjustable method thereof which includes light portions, which mix three colors (red, green, and blue) in different combinations so as to enable the emission of light to a variety of different colors; a switch portion, which is able to select and either turn on or off one or a plurality of light portions according to switch activation by a driver; a setting portion, which sets a brightness and color desired by the driver to the above light portion; a control portion, which compares information of the selected light portion with information inputted in the setting portion then determines a control value; and a pulse generating portion, which generates pulses corresponding to the control value, determined in the control portion, and distributes and transmits this to the light portion.

The above light portion is comprised of a bulb, which emits the three colors of light- red, green, and blue; a reflector, which receives the above three different colors of light from the bulb, synthesizes them, and reflects the colors toward a front of the light portion; a lens, fixed to the front of the light portion and which protects the same; and a socket, electronically connected to the power source and pulse generator and into which the bulb is inserted and supported.

The bulb is comprised of three filaments mounted at fixed intervals with respect to each other; bulb reflectors, one mounted at fixed distances from each of the filaments; a glass tube, inside of which the filaments and the bulb reflectors are installed, the glass tube having a red portion, a green portion and a blue portion which are color-tinted and respectively hold the above three filaments; and a socket insertion portion, electronically connected to the filaments and inserted in and electronically connected to the socket, and into which a rear, end portion of the glass tube is inserted and supported.

The color/brightness-adjustable light for automobiles of the present invention structured as in the above operates in the following sequence.

First, if the driver activates a switch corresponding to the light portion he/she wants to turn on, the saved, pre-existing information (bulb location, color, brightness, blinking, etc.) in the control portion is read, and if information pertaining to the bulb location, color, brightness, etc. is inputted into the setting portion, the new inputted information is compared with the standard existing information in the control portion, a control value is determined using the new information (if no new information is inputted in the setting portion the control value is determined using the existing information), and the control value is saved and transmitted to the pulse generating portion.

The pulse generating portion generates pulses according to the control value transmitted from the above control portion and then distributes and transmits this to the light portion.

The three filaments fixed in the bulb are either heated or turned off according to the pulses transmitted from the pulse generating portion, and if the filaments are heated and light emitted, this light is either directly or indirectly (after reflecting off the bulb reflectors) emitted out of the three color-tinted sections of the bulb and onto the reflector of the light portion. Accordingly, light is illuminated from the light portion 10 at a fixed color and brightness.

### BRIEF DESCRIPTION OF THE DRAWINGS

The accompanying drawings, which are incorporated in and constitute a part of the specification, illustrate an embodiment of the invention, and, together with the description, serve to explain the principles of the invention.
Fig. 1 is a block diagram illustrating a structure of a color/brightness-adjustable light for automobiles according to a preferred embodiment of the present invention;
Fig. 2 is a partial sectional view schematically illustrating a state in which light is combined in a light portion of the present invention;
Fig. 3 is a side view illustrating a bulb of the present invention;
Fig. 4 is a wave form chart illustrating a number of examples of pulses generated and distributed in a pulse generating portion; and
Fig. 5 is flow chart illustrating an operating process of a color/brightness-adjustable light for automobiles of the present invention.

### DESCRIPTION

Preferred embodiments of the present invention will now be described in detail with reference to the accompanying drawings.

Reference letter "R" in the drawings refers to the color red, "G" to green, and "B" to blue.

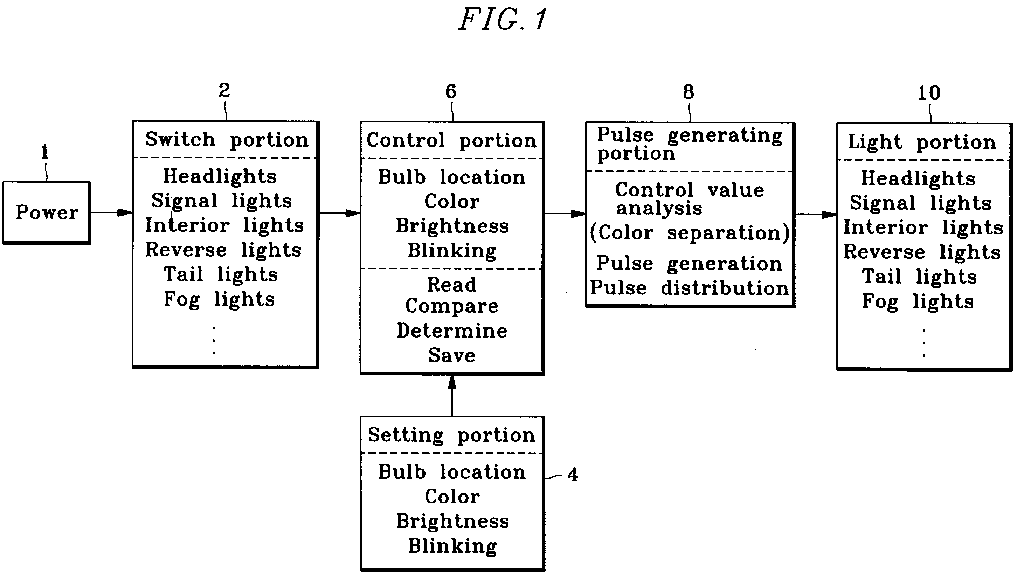

Referring first to Fig. 1, a color/brightness-adjustable light for automobiles of the present invention is structured including a power source 1, a switch portion 2, a setting portion 4, a control portion 6, a pulse generation portion 8, and a light portion 10.

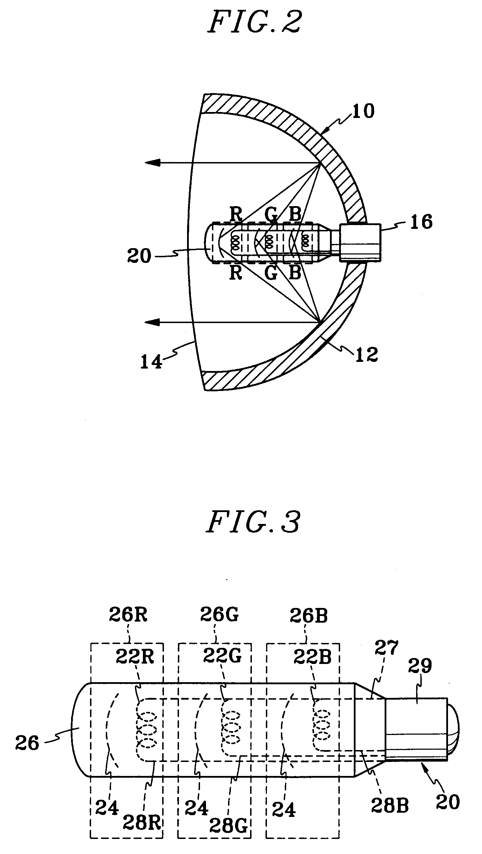

As shown in Fig. 2, the above light portion 10 is comprised of a bulb 20, which emits the three colors of light red, green, and blue; a reflector 12, which receives the above three different colors of light from the bulb 20, synthesizes them, and reflects the colors toward a front of the light portion 10; a lens 14, fixed to the front of the light portion 10 and which protects the same; and a socket 16, electronically connected to the power source 1 and pulse generator 8 and into which the bulb 20 is inserted and supported.

Referring now to Fig. 3, the bulb 20 is comprised of three filaments (22R), (22G), and (22B) mounted at fixed intervals with respect to each other; three bulb reflectors 24, mounted at fixed distances from each of the filaments (22R), (22G), and (22B); a glass tube 26, inside of which the filaments (22R), (22G), and (22B) and the bulb reflectors 24 are installed, the glass tube 26 having a red portion (26R), a green portion (26G) and a blue portion (26B) which are color-tinted and respectively hold the above three filaments (22R), (22G), and (22B); and a socket insertion portion 29, into which a rear, end portion of the glass tube 26 is inserted and supported, which is electronically connected to the filaments (22R), (22G), and (22B), and inserted in and electronically connected to the socket 16. Also, a wire 27 is used by all three of the filaments (22R), (22G), and (22B) as a negative wire, while three different wires (28R), (28G), and (28B) are used respectively as positive wires for the filaments (22R), (22G), and (22B), and pass through the socket 16 to be independently connected to the pulse generating portion 8.

The above light portion 10 is mounted to various areas of the automobile to act as headlights, turn signal lights, interior lights, reverse lights, brake lights, tail lights, fog lights, etc., and they are each independently and electronically connected to the power source 1 and pulse generating portion 8.

The switch portion 2 is able to select a single light or a multiple number of lights from the various kinds of above light portions according to light activation by a driver. Also, the switch portion 2 connects the selected light or lights to the power source 1 and control portion 6.

The setting portion 4 is electronically connected to the control portion 6 and sets and inputs bulb location, color, brightness, and blinking of the light portion 10, selected in the switch portion 2, to a state desired by the driver. So that the above setting and inputting can be achieved, it is preferable that the setting portion 4 is either of an analog-type, in which rotary switches are used, or a digital-type, in which push switches (utilized in a variety of numerical control or automatic control devices) are used.

The control portion 6 receives information on the selected light portion(s) 10 from the switch portion 2, and receives information on the selected light portion's 10 bulb location, color, brightness, and blinking, inputted in the setting portion 4. The control portion 6 compares the information inputted into the setting portion 4 with information it has stored, determines and saves this information as a control value, and transmits this value to the pulse generating portion 8. It is preferable, therefore, that the control portion 6 utilizes a small computer (not shown) realized through a memory device, calculating device, and a transmitting device, etc.

The pulse generating portion 8 analyzes the control value transmitted from the control portion 6, separates the light into the three basic colors, generates square wave pulses corresponding to the separation of the colors, and mixes and distributes the colors to the filaments (22R), (22G), and (22B) so that they match the control value. To achieve this, the pulse generating portion 8 is comprised of a device (not shown) that analyzes the control value and separates the colors, a pulse generating device (not shown) that converts the value that has been color separated into a square wave pulse, and a distribution and transmitting device (not shown).

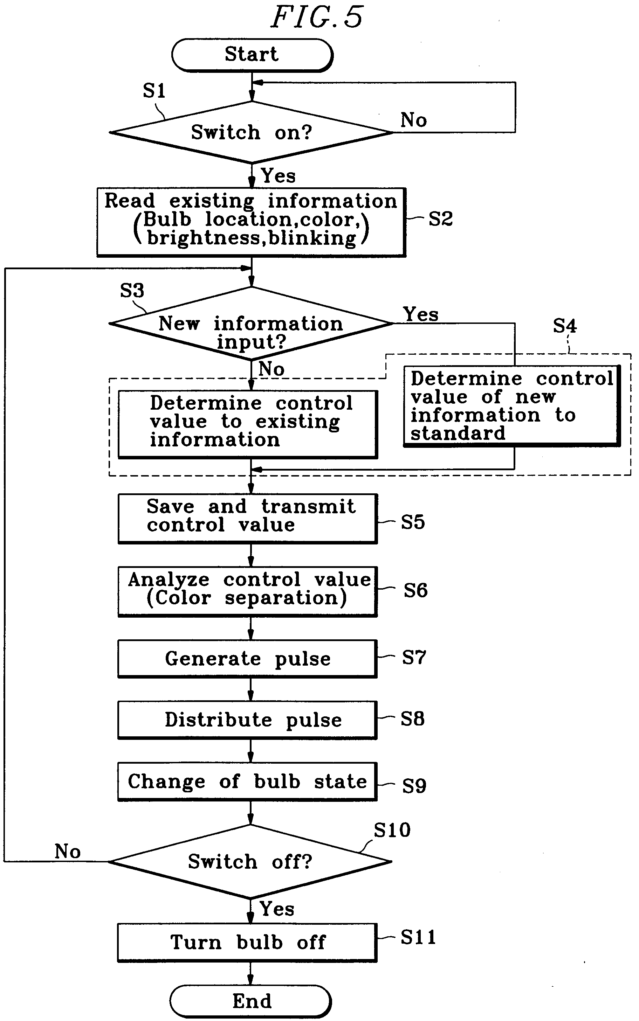

With reference to Fig. 5, the operational process of the color/brightness-adjustable light for automobiles of the present invention structured as in the above will now be explained.

If the driver activates a switch corresponding to the light portion 10 he/she wants to turn on (S1), the saved, pre-existing information (bulb location, color, brightness, blinking, etc.) in the control portion 6 is read (S2). Also, to allow the driver to change the state of the light portion 10 selected from the switch portion 2 from its existing state, if information pertaining to the bulb location, color, brightness, etc. is inputted into the setting portion 4 by the driver (S3), the new inputted information is compared with the standard existing information in the control portion 6, a control value is determined using the new information (if no new information is inputted in the setting portion 4 the control value is determined using the existing information) (S4), and the control value is saved and transmitted to the pulse generating portion 8 (S5).

If the above control value is transmitted to the pulse generating portion 8 as in the above, the control value is analyzed in the pulse generating portion 8, and if the colors are mixed, they are then separated such that they match the value of the control value (S6), and a pulse (square wave pulse) having an electronic value corresponding to this is generated (S7). The above pulse is then distributed and applied to the filaments (22R), (22G), and (22B) of the appropriate light portion(s) 10.

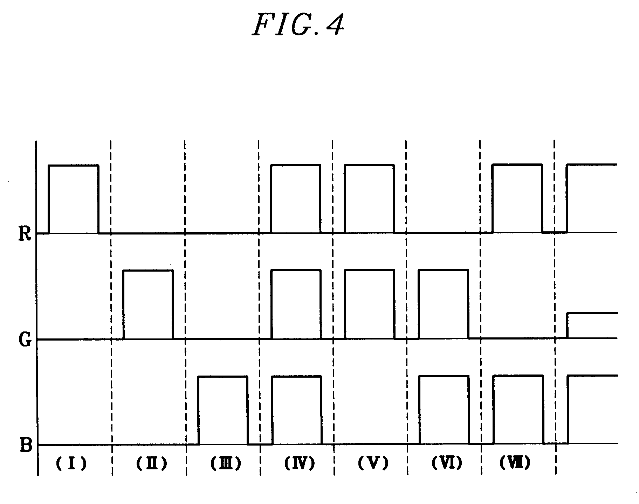

A number of examples of pulses distributed and applied as in the above is illustrated in Fig. 4. In this drawing, pulses are illustrated that separate and distribute the three colors (red, green, and blue) to make the 7 examples that appear in the drawing which are: (I) red, (II) green, (III) blue, (IV) white, (V) yellow, (VI) blue-green, and (VII) blue-red (magenta).

If pulses are applied to each of the filaments (22R), (22G), and (22B) as in the above, they are heated to identical or differing degrees, according to the pulses, to emit light (S9). The emitted light is either reflected off the bulb reflectors 24, one fixed in front of each of the filaments (22R), (22G), and (22B), or directly emitted. In either case, the light is emitted out through the red portion (26R), the green portion (26G), and the blue portion (26B) and onto the reflector 12 of the light portion 10.

If light, after passing through the color-tinted locations, is emitted onto the reflector 12 as in the above, the three different colors are synthesized and emitted out of the front of the light portion 10 having a fixed color and brightness. Accordingly, light is illuminated from the light portion 10 at a color and brightness desired by the driver.

Finally, if the switch is turned off (S10), the light portion 10 is turned off with the information in the present state it is saved in.

Although preferred embodiments of the present invention have been described in detail hereinabove, it should be clearly understood that many variations and/or modifications of the basic inventive concepts herein taught which may appear to those skilled in the present art will still fall within the spirit and scope of the present invention, as defined in the appended claims.

## Claims

1. A color/brightness-adjustable light for automobiles comprising:
at least one light portion, which mixes three colors (red, green, and blue) in different combinations so as to enable the emission of light to a variety of different colors;
a switch portion, which is able to select and either turn on or off one or a plurality of light portion, according to switch activation by a driver;
a setting portion, which sets a brightness and color desired by the driver to the above light portion;
a control portion, which compares information of the selected light portion with information inputted in the setting portion then determines a control value; and
a pulse generating portion, which generates pulses corresponding to the control value determined in the control portion and distributes and transmits this to the light portion.

2. The color/brightness-adjustable light according to claim 1, wherein said light portion comprises:
a bulb, which emits the three colors of light- red, green, and blue;
a reflector, which receives the above three different colors of light from the bulb, synthesizes them, and reflects the colors toward a front of the light portion;
a lens, fixed to the front of the light portion and which protects the same; and
a socket, electronically connected to the power source and pulse generator and into which the bulb is inserted and supported.

3. The color/brightness-adjustable light according to claim 2, wherein the bulb comprises:
three filaments mounted at fixed intervals with respect to each other;
bulb reflectors, one mounted at fixed distances from each of the filaments;
a glass tube, inside of which the filaments and the bulb reflectors are installed, the glass tube having a red portion, a green portion and a blue portion which are color-tinted and respectively hold the above three filaments; and
a socket insertion portion, electronically connected to the filaments and inserted in and electronically connected to the socket, and into which a rear, end portion of the glass tube is inserted and supported.

4. The color/brightness-adjustable light according to claim 3, wherein a wire is used by all three of the filaments as a negative wire, while three different wires are used separately as positive wires for the filaments and pass through the socket to be independently connected to the pulse generating portion.

5. A method for adjusting color and brightness of a light for automobiles, comprising the steps of:
determining which, if any, light portions are in ON states;
reading inputted, existing information of the light portions that have been activated; and
determining new information inputted by the driver and comparing the new information with the existing information to generate a new control value;
generating a pluse value corresponding to the control value; and
transmitting the pluse value the light portions, whereby the color and brightness of the light is adjusted in accordance with the transmitted pluse value.
